# EUROPEAN PATENT SPECIFICATION

(11) **EP 3 253 193 B1**
(45) Date of publication and mention of the grant of the patent: **15.07.2020**
(21) Application number: 15840998.7
(22) Date of filing: 22.12.2015
(51) Int. Cl.: A01G 9/02

(54) **METHOD FOR VERTICAL CULTIVATION OF PLANTS IN PLANT POTS, A DEVICE FOR VERTICAL CULTIVATION OF PLANTS IN PLANT POTS AND A SPECIAL PLANT POT**
VERFAHREN ZUM VERTIKALEN ANBAU VON PFLANZEN IN PFLANZENTÖPFEN, VORRICHTUNG ZUM VERTIKALEN ANBAU VON PFLANZEN IN PFLANZENTÖPFEN UND SPEZIELLER PFLANZENTOPF
PROCÉDÉ DE CULTURE VERTICALE DE PLANTES EN POTS, DISPOSITIF POUR CULTURE VERTICALE DE PLANTES EN POTS, ET POT SPÉCIAL

(30) Priority: 22.12.2014 PL 41069514
(43) Date of publication of application: 13.12.2017
(73) Proprietor: Florabo Sp. z o.o., 02-654 Warszawa (PL)
(72) Inventor: KAMINSKA, Halina, 01-123 Warszawa (PL); GACKOWSKI, Wojciech, 02-654 Warszawa (PL)
(74) Representative: Marcinska-Porzuc, Aleksandra
(86) International application number: PCT/PL2015/000205
(87) International publication number: WO 2016/105222

(56) References cited:
- EP-A1- 2 420 133
- EP-A2- 1 803 346
- WO-A1-2007/026417
- WO-A1-2013/161691
- CN-A- 101 507 398
- CN-A- 103 929 945
- US-A- 5 555 676
- US-A1- 2006 156 624
- US-A1- 2011 258 925

## Description

This invention relates to a method for vertical cultivation of plants in plant pots in a modular configuration. Also, the invention relates to a device for vertical cultivation of plants in plant pots in a modular configuration suitable for growing ornamental plants and food crops as well as to a special plant pot to be used in the device, the method, and the system according to the invention.

Many modular systems and methods for cultivating pot plants are known. These systems, being equipped with irrigation and illuminating systems, are embodied in horizontal as well as vertical configurations. From Chinese patent CN103250588 (A) one knows a method for cultivating plants comprising heating up plants in plant pots, illuminating them, and sprinkling. Parameters of heating up, illuminating, and sprinkling, along with the air humidity in the proximity of the cultivated plants are controlled, and the method uses a smart plant pot that was claimed in that patent to be protected also as a device. However, in the case of a large number of pots with plants such cultivation becomes complicated since every plant pot is treated individually. The number of sensors and illuminating and sprinkling devices also is significant increasing the risk of failure. Moreover, the wetting system and illumination wiring system spread out.

Chinese utility pattern CN2663591 (Y) describes a multilevel vertical wall module for cultivating flowers, where every level of the module comprises a reservoir with water and a duct delivering the water to every plant pot of the given level.

Chinese utility pattern CN203762001 (U) discloses a vertical container for plants manufactured in a modular manner from AES plastic, provided with water permeable ports, the ports being dedicated also for ventilating the plants. Two ducts with water, placed in the upper and lower level of the module, serve for irrigation.

Also, from Polish Patent Application P346362 one knows a plant pot comprising a first space delimited by a first vertical wall and a second space delimited by a second vertical wall and a bottom wall. A porous plate separates the first and second spaces from each other. A third space delimited by a third vertical wall and the bottom wall encloses the second space. The second space serves for accommodating a moisture keeping material therein, becoming watered but being air permeable at the same time.

Also, from Polish Patent Application P.314272 a device is known for automated irrigation, particularly irrigation of pots with flowers. The device is composed from a programming apparatus and a distributing apparatus that has electromagnetic valves built into individual irrigation systems. The valves are connected electrically, via relays, to the programming apparatus in which the electronic circuit consists of a control unit linked with a control desk and a memory of switch on/off cycles as well as with a display of irrigation time and working time of individual irrigation systems.

US 2011/258925 A1 discloses methods and devices for vertical horticulture. The aim of the present invention is to provide an alternative method for cultivation of pot plants in a modular arrangement and vertical configuration that would be reliable, simple in operation, fitted to the needs of cultivated plants and simultaneously flexible such that it can be used for cultivating different ornamental plants and food crops.

Moreover, the aim of the invention is to provide a device for vertical cultivation of plants in pots, that guarantees good conditions for cultivating plants using the method according to the invention and that uses plant pots designed especially for this device as well as general-purpose pots which are merely adapted for the needs of cultivation within this device.

Moreover, the aim of the invention is to provide a special plant pot adapted in particular for the device according to the invention and making it possible to obtain the best embodiment of the method according to the present invention.

Also, the aim of the invention is to provide such a system of cultivating plants that would make it possible to expose cultivated plants in different, convenient configurations and that would be flexible enough to make it possible to adapt it to existing space and room conditions.

The method according to the invention is characterised in that irrigation of plants is performed gravitationally with the use of a band of transmission made from water permeable, unwoven fabric, and comprises steps of delivering water to the highest level of the plants such that the water freely enters a pot via a irrigating channel. Next, the water penetrates the plant pot, moistening also the unwoven fabric portion of the plant pot, the excess water flowing to an overflow channel below the plant pot. The water is directed to the irrigating channel of the lower plant level and irrigates subsequent levels of the plants located below in a similar manner. From the lowest level of the plants water enters a reservoir, from which it is again pumped by a pump, after filtering, to the highest level of the plants. Water from said reservoir is delivered also to sprinklers. The water level in the reservoir is controlled by means of a lower water level sensor and an upper water level sensor that signal, on a control panel, a deficiency or a surplus of water in the reservoir, correspondingly. The ducts delivering water are flushed periodically in a closed cycle. Moreover, the plants are illuminated periodically using a source of light of a spectrum fitted for the needs of the plants and their photosynthetic and energetic efficiency, with a possibility of setting the angle of incidence of the light rays onto the leaves of the cultivated plants. The irrigating channel delivers water to the plant pot from above whereas the unwoven-fabric band of transmission of every plant pot passes the water downwardly - from the irrigating channel to the overflow channel. Optionally, the water may be delivered to the plant pot from the bottom up, from an overflow reservoir by means of a water-absorbing band connected with the bottom of the plant pot, which soaks with water and moistens the unwoven-fabric band of transmission by means of capillary action, passing water from the bottom up and irrigating the root system of the plants from below. The control of the angle of incidence of the light rays onto the plants is performed by moving a movable frame, with a source of light located thereon, relative to a casing with the plants. The motion of the frame relative to the casing is performed by turning it about an axis parallel to one of the sides of the casing. The irrigation of the plants is performed in a closed cycle and water in the reservoir is refilled manually. Optionally, the irrigation of the plants is performed in an open cycle with a connection to the water supply/sewer system.

In a device according to the invention a vertical casing comprises at least one chamber in which there is a plant pot and at least one irrigating channel and an overflow channel that are arranged such that the irrigating channel is located above the chamber and the overflow channel is located below the chamber. The longitudinal axis of the plant pot is inclined relative to the end face of the vertical casing at an angle from 8° to 25°, preferably 13°. After placing within the chamber, the bottom wall of the plant pot is facing toward an aerating channel located in the bottom of the chamber and open to the outside. In the device every plant pot comprises a water permeable unwoven fabric that constitutes a band of transmission for water and/or has an additional unwoven fabric for storing water. The casing is mounted to support structure in a form of a frame that on at least one of its sides has means for illuminating and means for extra sprinkling the plants. To the lower side of the frame a container is mounted comprising a water reservoir to which water flows down from overflow channels and from which water is taken for irrigation and sprinkling. A control panel is located in an exposed place on the front side of the casing, comprising a signaling device for signaling the water level in the reservoir and a switch for a circuit delivering water to the plants and means for controlling the amount of water delivered to the cultivated plants. Preferably, the side of the frame has a movable portion in a form of at least one frame mounted rotatably relative to the axis of rotation that is parallel to the side of the frame. Preferably the side of the frame is covered by a cover that is mounted rotatably to said side of the frame. Preferably, the axis of rotation is parallel to the longitudinal axis of said side of the frame. Preferably, both movable frames and the cover of the side of the frame are turned by electric motors. The means for illuminating and extra sprinkling the plants, situated on the side of the frame, are actuated periodically, preferably using electronic control means, according to the illumination and air humidity conditions needed by the plants. Preferably, the movable frames have identical shapes and sizes and in the rest position they are placed between the corresponding side of the frame and the side of the casing. Optionally, the means for illumination and extra sprinkling are located on the movable cover. The irrigation system comprises a high-efficiency pump, at least one water filter, at least one water level sensor in the water reservoir, and at least one signaling device providing information about the water level in the water reservoir, preferably in a form of a LED diode. The irrigation means is at east one atomizer supplied with water from the irrigation system. The illumination means are equipped with a source of light that is fitted in terms of its spectrum contents and photosynthetic and energetic efficiency to the needs of the cultivated plants. Preferably, the power supply for the irrigation, illumination, control, and signaling means is a DC power supply. Optionally, the power supply for the irrigation, illumination, control, and signaling means is an AC power supply. The sprinkling means comprises a system for controlling the sprinkling jet and its range that is fitted to the growth of the plants. The system for controlling the sprinkling jet and its range comprises an assembly for setting the sprinkling jet and its range, preferably in a form of a potentiometer. Preferably, one diode signaling device is coupled with two water level sensors, the first water level sensor being located at the bottom of the water reservoir and the second water level sensor being located at the upper edge of the water reservoir. Preferably, the casing is formed from horizontal, shape-coupled modules, and also the water reservoir is shape-coupled to the casing. Optionally, the casing is formed from vertical modules that are shape-coupled. In a variant, the casing comprises vertical modules coupled to each other by means of flexible connectors that make it possible to form and fit the spatial shape of the device arbitrarily to the cultivation of the plants in the plant pots. In a variant, the casing is formed from single plant pot modules that are shape-coupled. Optionally, the casing is formed from single plant pot modules and flexible connectors that make it possible to fit the spatial shape of the device arbitrarily to the cultivation of the plants in the plant pots. Preferably, the casing is adapted for hanging. Optionally, the casing is freestanding. All the chambers allow for inserting plant pots only from one side of the casing. Optionally, some chambers allow for inserting plant pots from one side of the casing and some chambers allow for inserting plant pots from the other side of the casing. Preferably, the casing is made from ABS plastic by thermoforming. Optionally, the casing is made from PVC by thermoforming. Optionally, the casing is made from EPP by injection moulding. In a variant, the casing is made from EPS by injection moulding. In a variant, the casing is made from XPS by injection moulding.

A special plant pot according to the invention is characterized in that it is made from sealing rubber in the upper part, the rubber forming also the upper edge, it is made from a tight sheath in the middle part, and from water-permeable transmission unwoven fabric in the lower part. The sealing rubber is arranged such that it terminates in the proximity of the upper edge of the plant pot whereas on the opposite side it covers the surface extending downwardly, preferably to one fourth of the height of the plant pot, and the band of the tight sheath extends yet further below, preferably the band being of a width of the half of the height of the plant pot. In the tight sheath of the plant pot there is an inflow opening for delivering water and an overflow opening for removing excess water from the plant pot. The lower part and the bottom wall of the plant pot are made from water permeable transmission unwoven fabric. The inflow opening is located on the opposite side and above the overflow opening. The tight sheath is lined with water permeable transmission unwoven fabric on the inside, extending from the upper edge of the tight sheath and terminating above the inflow opening and overflow opening. The storing unwoven fabric adhering to the transmission unwoven fabric from inside is arranged such that it starts at the half of the height of the water permeable transmission unwoven fabric and overlaps partially onto the inflow opening and the overflow opening. Preferably, the special plant pot is frusto-conical in shape. Optionally, the special plant pot is frusto-cylindrical in shape. Preferably, the upper edge of the special plant pot is made from ornamental rubber or caoutchouc or watertight ABS material whereas the tight sheath of the special plant pot preferably is made from plastic or PVC. The lower part of the special plant pot made from water-permeable transmission unwoven fabric is located in a shield, preferably made from plastic or PVC material, and is coupled with the sheath. In a variant, the bottom of the special plant pot has a band of water-permeable transmission unwoven fabric extending downwardly, for drawing the moisture from below. Said pot is built from 30% to 85% of unwoven fabric, preferably 45%, the transmission unwoven fabric filling the internal tight sheath being a mix of cut polypropylene and polyester fibers, whereas the unwoven fabric filling the lower part, the bottom, and the band is made from polypropylene fibers.

The modular system of vertical cultivation of plants in plant pots is characterized in that the vertical casing comprises at least one chamber in which a special plant pot is placed such that an irrigating channel is located at the top and an overflow channel is located at the bottom. The longitudinal axis of the plant pot is inclined relative to the end face of the vertical casing at an angle from 8° to 25°, preferably 13°. After placing within the chamber, the bottom wall of the plant pot is facing toward an aerating channel located in the bottom of the chamber and open to the outside. The casing is mounted to a frame-like support structure that is adapted to place illuminating means and means for extra sprinkling the plants on at least one of its sides. To the lower side of the frame a container is mounted comprising a water reservoir to which water flows down gravitationally from overflow channels. The modular system of vertical cultivation of plants in plant pots uses a method and a device according to the present invention. Preferably, the system comprises a special plant pot according to the present invention.

A method according to the invention makes it possible to water different types of plants in plant pots - plants that need water to be delivered to the soil from above as well as plants that need water to be delivered to the root system from below. In both cases water flows down gravitationally to every line of the cultivated plants.

The device for vertical cultivation of plants in plant pots according to the invention uses vertically and horizontally coupled seat-like plant units, making it possible to arrange arbitrarily indoor or outdoor green spaces of various scales. Versatility of this solution gives a full freedom of selecting the style, functions, and shape to experienced users as well as persons who meet such a system for the first time. The arrangement of the irrigating and overflow channels is adapted for plant pots made in part from water-tight material and in part from water-permeable unwoven fabrics, this making it possible to distribute water uniformly to all plants, not over-watering and strangling the roots nor over-drying them. The unwoven fabric bottom of the plant pot makes allows for air penetration, via an aerating channel in the vertical casing, to the lower part of the plant pot and ensures ventilation thereof.

The system according to the invention is adapted for fully automated cultivation of plants in plant pots, using an autonomous power supply and water source. However, it may use external power supplies and water delivery from existing water-pipe networks.

The use of plant pots according to the invention gives a possibility of cultivation of plants having different habitat needs. Also, it is possible to use the ventilation region for venting and cleaning the air via the rootstock. Unwoven fabrics of various parameters used in the plant pots give a possibility of more uniform irrigation of plants and aerating the roots, suitably to their needs but independently of the parameters of the soil substrate in which the plants were grown.

The present invention will be fully appreciated and understood referring to the following detailed description taken in conjunction with the accompanying drawings, in which
Fig. 1 shows an exploded view of a device for vertical cultivation of plants with a stiff module of a casing with fifteen chambers,
Fig. 2 shows a front view of the device of Fig. 1,
Fig. 3 shows a perspective view from behind of the device of Fig. 1,
Fig. 4 shows a control panel placed on the casing of Fig. 1,
Figs. 5 and 6 show a side view of the device of Fig. 1,
Fig. 7 shows a cross-sectional view of the casing of Fig. 1 with plant pots loaded in the chambers,
Fig. 8 shows a frame with a casing of fifteen chambers arranged in three rows and five columns,
Fig. 9 shows a frame with a casing of six chambers arranged in three rows and two columns,
Fig. 10 shows a casing of sixteen chambers arranged in four rows and four columns,
Fig. 11 shows a front view a casing of forty-two chambers on one side, arranged in seven rows and six columns, in a free-standing embodiment,
Fig. 12 shows a perspective view of the casing of Fig. 11,
Fig. 13 shows a plan view of the casing of Fig. 11,
Figs. 14 and 15 show front views of two variants of the casing of three rows and five columns of the chambers connected to each other via flexible connectors,
Fig. 16 shows a perspective view of the casing of Fig. 15,
Fig. 17 shows a plan view of the casing of Fig. 16,
Fig. 18 shows a plan view of the casing of Fig. 14,
Fig. 19 shows a perspective view of the casing of Fig. 14,
Fig. 20 shows a front view of a casing with five rows and four columns of chambers with two movable frames for illuminating and sprinkling,
Fig. 21 shows a side view of the casing of Fig. 20,
Fig. 22 shows a plan view of the casing of Fig. 20,
Fig. 23 shows a perspective view of the casing of Fig. 20,
Fig. 24 shows a front perspective view of the casing of Fig. 10,
Fig. 25 shows a rear perspective view of the casing of Fig. 10,
Fig. 26 shows a cross-sectional view of a special plant pot,
Fig. 27 shows a side view of a special plant pot of Fig. 26,
Fig. 28 shows a cross-sectional view of a special plant pot with a band for capillary irrigation of plants from below,
Fig. 29 shows a side view of the special plant pot of Fig. 15.

The following description presents embodiments of a method and system for vertical cultivation of plants in plant pots in a modular arrangement as well as embodiments of a device for vertical cultivation of plants in plant pots in a modular arrangement, suitable for cultivation of ornamental plants and food crops, and also embodiments of a special plant pot to be used with the device, the method, and the system according to the invention. However, it should be emphasised that the described embodiments are not intended to limit the scope of protection but merely illustrate one out of many possible applications of the present invention. The present invention is applicable everywhere where a cultivation of plants is needed, making it possible to freely arrange green spaces of various scales, indoors as well as outdoors.

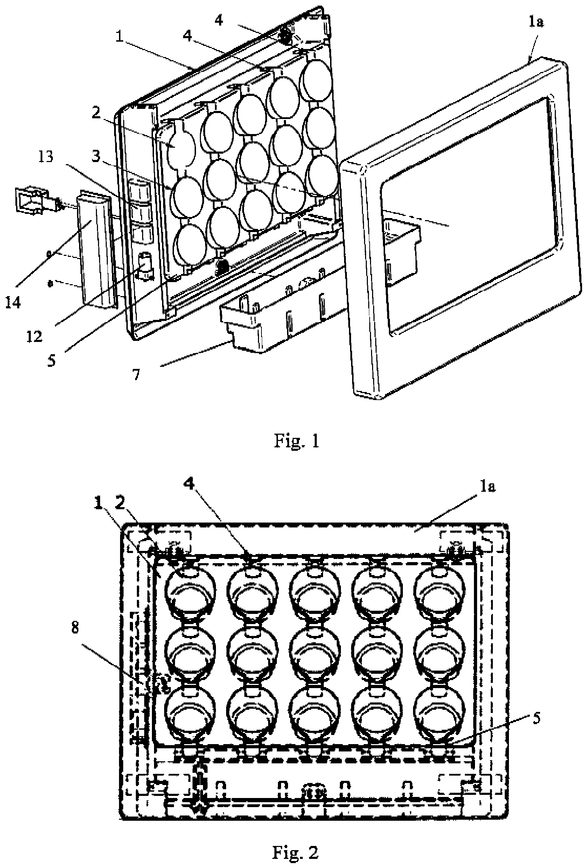

Fig. 1 shows a device for vertical cultivation of plants in special plant pots according to the invention, the device being shown in a first embodiment. The device of a width of 935 mm and a height of 739 mm has a vertical casing 1 that constitutes a module for a seat-like cultivation of plants. The casing 1 has a depth of 130 mm and is mounted to a frame 1a. The upper side and two side arms of the casing la have a width of 80 mm, whereas the bottom side has a width of 182 mm. The casing 1 comprises fifteen chambers 2 arranged symmetrically in three rows and five columns, in which special plant pots 3 are placed. All the chambers 2 are frusto-conical and have a height of 110 mm and are facing to the same side. The bottom of every chamber 2 has a diameter of 100 mm. A ventilating zone with a ventilating opening is located at the bottom of the chamber 2. At the root of the chamber, the chamber 2 has a diameter of 120 mm. An irrigating channel 4 is located above every chamber 2 and an overflow channel 5 is located below the chamber 2. The device is equipped with a closed cycle system for irrigating plants.

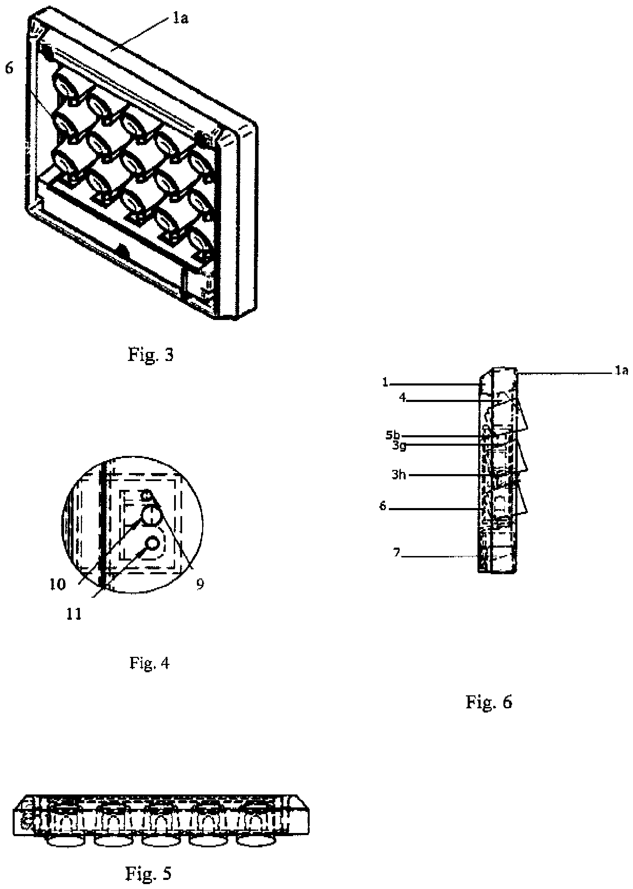

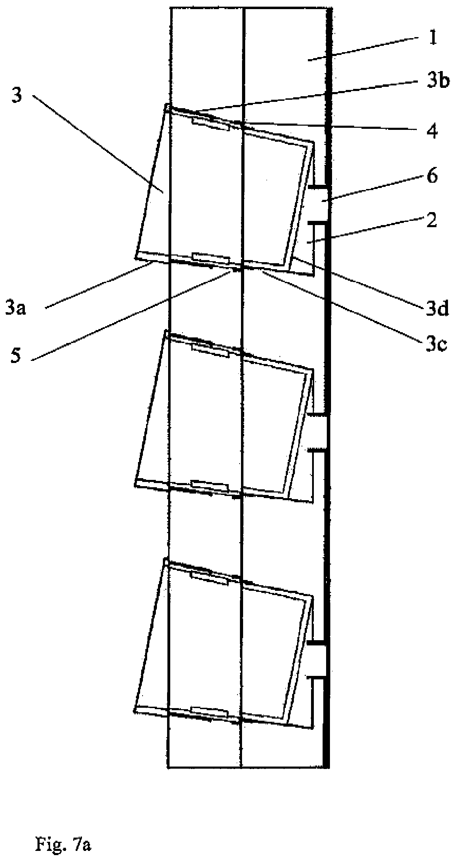

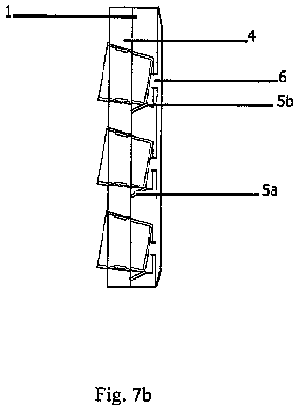

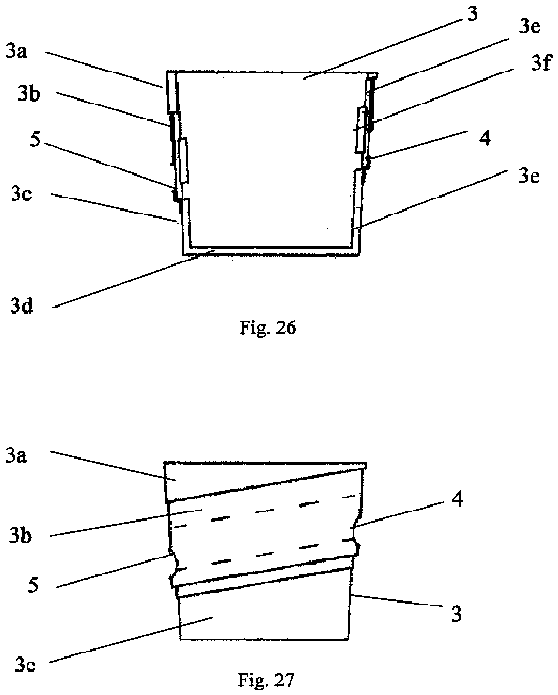

Water is taken from a reservoir 7 that is mounted by shape coupling to the lower part of the frame 1a. Also, this is the destination of excess water after the whole irrigation cycle. Water is refilled manually. The reservoir 7 contains 10.7 liters of water. The amount of water being present in the irrigation cycle is monitored and exceeding the minimum or maximum water level is signaled on a control panel 8 that is located on the front wall of the casing 1, close to the vertical side of the frame 1a, as shown in Fig. 2. The reservoir 7 is equipped with a lower water level sensor and an upper water level sensor. The upper water level sensor signals the minimum level of water in the system. When the water level exceeds the minimum acceptable threshold value, a diode-based signaling device 9 is switched on alerting that water in the reservoir should be refilled. Similarly, during refilling water, the second sensor, placed at the upper edge of the water reservoir above the lower sensor, generates an electric signal triggering the diode-based signaling device 9. The diode device 9 lights then in a pulsatory manner informing that the water level in the reservoir has been exceeded. Additionally, on the panel 8 shown in an enlarged view in Fig. 4, there is a switch 10 of the irrigation, sprinkling, and illumination system as well as a potentiometer 11 for controlling the irrigation efficiency. The water circulation is obtained by means of a pump 12 controlled electronically. The nozzle of the water intake is equipped with a filter (not shown) with known water permeability parameters, removing most of contaminations. Electrical subassemblies are supplied from a DC power supply in a form of DC battery assembly 13. The power supply 13 and the pump 12 are located on the vertical side of the frame 1a and are covered by a cover 14. Irrigation is performed cyclically, keeping the desired humidity level of the rootstock and flushing all the piping delivering water to the plants. This ensures a longterm patency of the system working in a closed cycle, without the need of servicing, thanks to eliminating the risk of the growth of biological cultures and building-up scale inside the water ducts. Water is dispensed onto the transmission band of unwoven fabric 3e via the irrigating channel 4. In this case a water-permeability occurs perpendicular to the cross-sectional plane of the plant pot 3, that is illustrated in the following in Figs. 26 and 27. Excess water is transferred by the water-permeability in the cross-sectional plane of the plant pot 3 and transferred to a plant pot located below via the overflow channel 5. The task of the transmission unwoven fabric 3e is both to release water to the soil substrate and plant roots and also to drain the soil substrate to prevent accumulation of too much water within the substrate. In order to ensure the optimal vegetation conditions, the system is equipped with an extra illuminating-sprinkling system hidden in a lateral arm of the vertical frame 1a. During the operation of the system with illumination and sprinkling, a drive system, controlled electronically, opens the cover 14 for a preset time needed to illuminate and sprinkle the plants properly. The source of light is selected considering the spectrum contents as well as the photosynthetic and energetic efficiency. Sprinkling is performed by a set of atomizers supplied with water from the irrigation system. The whole device is equipped with catches for hanging on a wall. Figs. 5, 6, and 7 show an arrangement of plant pots 3 in the device. Longitudinal axes of the plant pots are inclined relative to the end face of the casing 1 at an angle of 13°. After placing a plant pot 3 in a chamber 2, this being best illustrated in Fig. 7, the bottom 3d of the plant pot 3 is facing towards an outwardly open aerating channel 6 located in the bottom of the chamber 2. The irrigating channel 4 is located directly at a height of the lower edge of a tight sheath 3b of the plant pot 3. Water enters the plant pot gravitationally and moistens the root system of the plant by means of unwoven fabrics located within the plant pot 3. Excess water is removed, also gravitationally, by means of the overflow channel 5 located in the neighborhood of the edge 3a and the lower part 3c of the plant pot 3.

A device for vertical cultivation of plants in plant pots is not limited exclusively to the shown embodiment. For example, Fig. 3 shows a rear perspective view of another embodiment of a device according to the invention. In this embodiment aerating channels 6 are located next to profiled chambers 2 and also prevent anaerobic processes within a watered plant pot and allow for cleaning the air through the plant pot. In another embodiment, in order to signal exceeding the lower or upper water level in the reservoir, separate diode signaling devices 9 are used having different colors or pulsing with a characteristic frequency. Moreover, water for the irrigation may be optionally taken from an external source, and, after the irrigation cycle, discharged to the sewer system. Moreover, water for the irrigation may be, optionally, taken from an external source and, after the irrigation cycle, may be discharged to the sewer system.

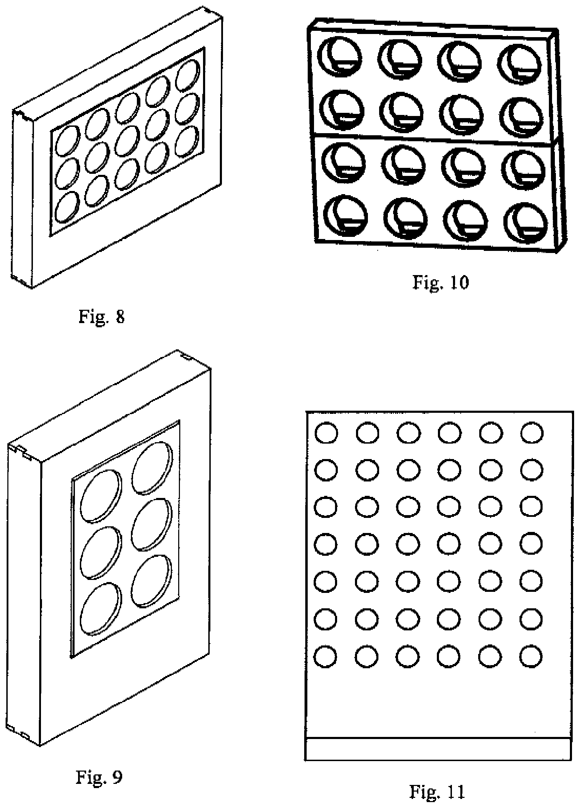

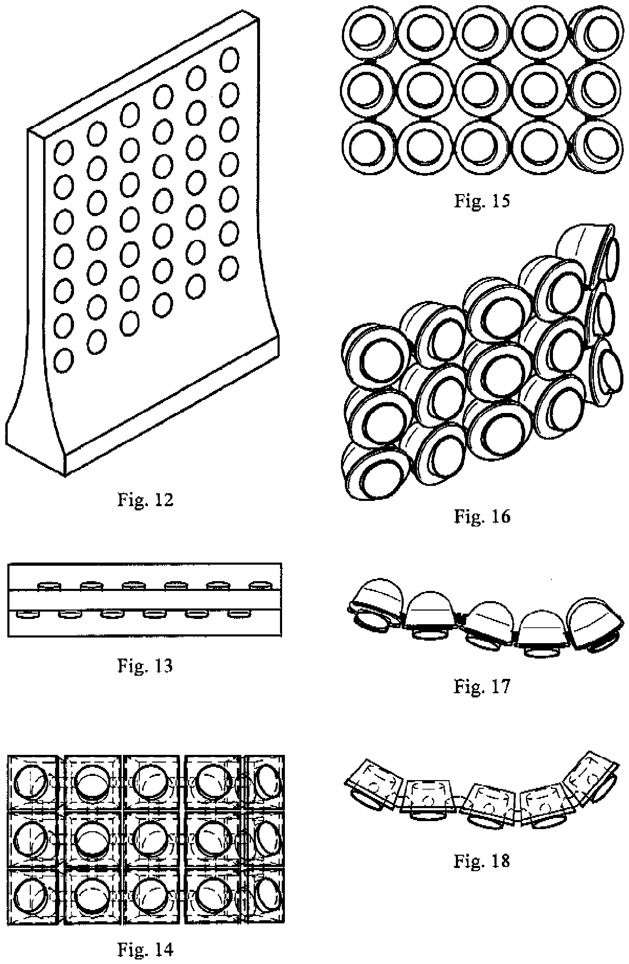

Usually, an open cycle is used in devices of larger areas. Furthermore, the number and arrangement of chambers 2 are not limited to the embodiment illustrated previously in Fig. 8, where a device is shown for vertical cultivation of plants with a vertical module having fifteen columns arranged in three rows and five columns. For example, Fig. 9 shows a device for vertical cultivation of plants having six chambers arranged in three rows and two columns. Fig. 10 shows a casing having sixteen chambers 2 arranged symmetrically in four rows and four columns, and Fig. 11 shows a device with two sets, each of them having forty-two chambers 2 arranged in seven rows and six columns on each side of the device. Figs. 11, 12, and 13 show a freestanding embodiment of the device. As seen best in Fig. 13, plants may be placed in chambers of the casing on both sides of the casing. Figs. 14-19 show flexible variants of the casing. Then, it is possible to flex the columns to expose cultivated plants in the most effective way. However, the device according to the invention is not limited to the shown embodiments.

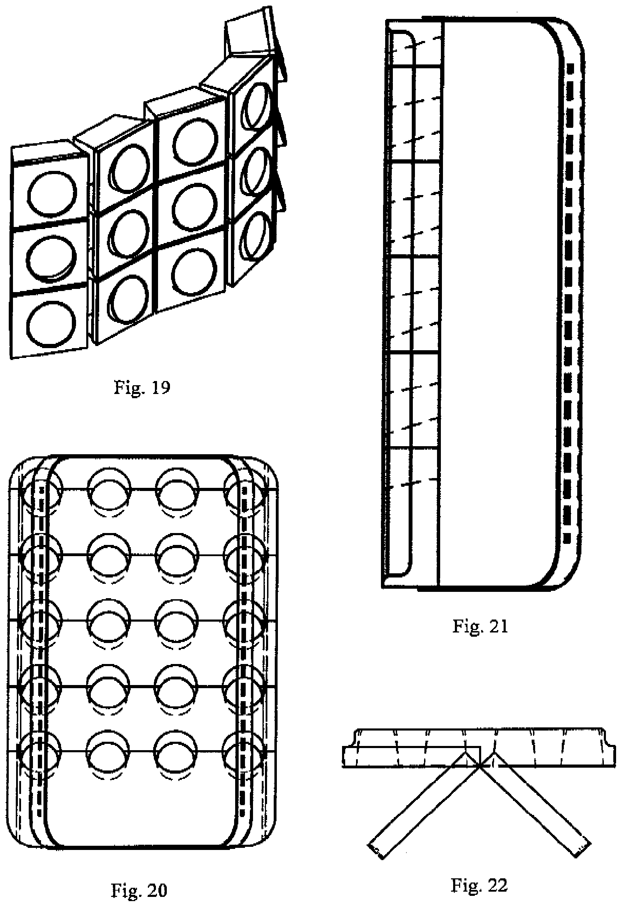

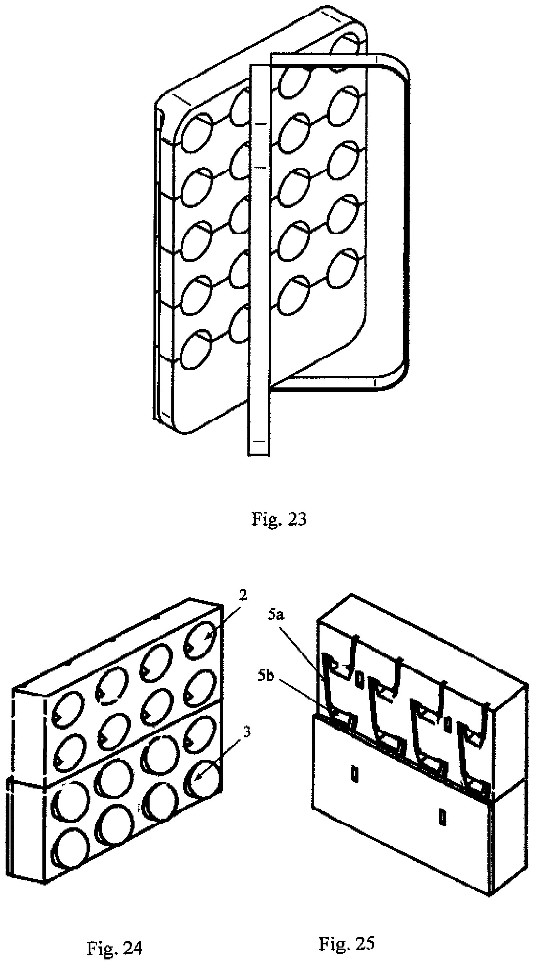

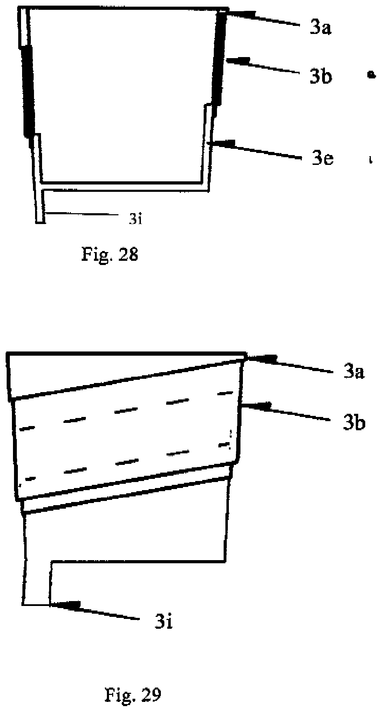

Figs. 20 to 23 show in turn an embodiment of the device with two movable frames 1b and 1c. The axes of revolution of the frames are parallel to the longer arm 1a of the casing and are placed at the half of the width of the casing 1. Then, it is possible to move the illuminating and irrigation means placed on the frames 1b, 1c. Figs. 24 and 25 show an embodiment of the device with the casing having sixteen chambers arranged in four rows and four columns, water being delivered to the plant pots 3 placed in the chambers 2 from below by means of capillary action. As is shown best in Fig. 7b in connection with Fig. 25, water flows down gravitationally to the reservoir 5b via a channel 5a. Water is taken therefrom by a band 3i to a special plant pot. A special plant pot, most suitable for this embodiment, is shown in Fig. 28 and 29. Fig. 28 shows an embodiment of a plant pot 3 delivering water to the cultivated plant from below. The plant pot is lined with transmission unwoven fabric 3e in the lower part, defining, also, the bottom with the band 3i protruding downwardly.

Figs. 26 and 27 show, in turn, a special plant pot 3 that makes it possible do deliver water to the cultivated plant from above. The plant pot 3 is frusto-conical and has a height of 125 mm and has an upper edge 3a, a tight sheath 3b, and a lower part 3c. The lower base of the cone of the plant pot 3 has a diameter of 95 mm, whereas the upper diameter of the cone of the plant pot 3 is 125 mm. In the tight sheath 3b there is an irrigating channel 4 and an oppositely placed overflow channel 5. The irrigating channel 4 makes it possible to deliver water to the plant pot 3 in equal doses. A water-permeable transmission unwoven fabric 3e and a water-storing unwoven fabric 3f adhere to the tight sheath 3b from inside. The use of the storing unwoven fabric 3f in the special plant pot 3 allows for optimal irrigation and aerating the rootstocks of the plants in the special plant pots 3. The upper edge 3a of the plant pot 3 is made from ornamental rubber, whereas the tight sheath 3b and the lower part 3c of the plant pot 3 is made from PVC. The unwoven fabric 3e filling the internal tight sheath 3b is a mixture of cut polypropylene and polystyrene fibers, and the unwoven fabric filling the lower part 3c and the bottom 3d is made from polypropylene fibers. The storing unwoven fabric 3f is arranged such that, on one side, it partially overlaps the irrigating channel 4, and, on the other side, overlaps the overflow channel 5. The transmission unwoven fabric 3e adheres to the lower part 3c of the plant pot. The use of unwoven fabrics 3e and 3f in the plant pots 3 results in passing water in a plane, storing water, and ability of capillary ascent that is adapted for selected groups of plants and the ways of their cultivation. Unwoven fabrics 3e and 3f occupy totally 30% of the surface area of the plant pot 3 and allow for distributing water to the whole plant pot 3 preventing over-watering, strangling the roots or over-drying them. The lower part 3c is closed by the bottom 3d made from the transmission unwoven fabric 3e. The structure of the lower part 3c closed by the bottom 3d made from the unwoven fabric 3e allows for air penetration to the lower part of the special plant pot 3 and its ventilation.

Such a cover for the rootstock prevents, mechanically, falling out of the soil substrate from the special plant pot 3 and prevents escaping spores of bacteria and fungi growing in the soil environment.

In the method for vertical cultivation of plants in special plant pots according to the invention the irrigation of plants is performed by a water band of transmission. In a first embodiment of the method according to the invention water is first delivered to the highest level of the plants by means of a pump, over every plant pot 3 with a plant. Next, the water enters the plant pot 3 freely via the irrigating channel 4, penetrating the plant pot and moistening its part of the unwoven fabric 3e and 3f. The excess water is passed to the overflow channel 5 below the plant pot and travels gravitationally to the irrigating channel 4 of the lower level of the plants, thus irrigating next levels of the plants located below. From the last, the lowest level of the plants the water gravitationally enters the water reservoir 7, from where, after filtering, it is pumped again by the pump 12 to the highest level of the plants, to the irrigating channels of the highest plants.

In a second embodiment of the method according to the invention, water is first delivered to the highest level of the plants by means of a pump, below every plant pot 3 with a plant, this being best shown in Fig. 25. Next, as shown in Fig. 29, the water enters the plant pot 3 by means of capillary action via the irrigating band 3i, penetrating the plant pot and moistening its part of the unwoven fabric 3e and 3f. Simultaneously, the water passes from below of the plant pot 3 of the higher row to the space below the plant pot 3 of a lower row. In this row the water enters the plant pots 3 in a similar way via the irrigating bands 3i. From the last, the lowest level of the plants the water gravitationally enters the water reservoir 7, from where, after filtering, it is pumped again by the pump 12 to the highest level of the plants, to the irrigating bands of the highest plants.

Also, water is delivered to sprinklers from the reservoir 7. The irrigating and sprinkling jets are controlled and the absence or a surplus of water in the reservoir 7 is signaled on the control panel 8. The water-delivering ducts are flushed cyclically in a closed cycle when the device is operated in the service mode. The illumination of the plants is performed cyclically using a source of light with the spectrum fitted for the needs of the plants and their photosynthetic and energetic efficiency.

### List of symbols

- 1: casing
- 1a: frame
- 1b, 1c: movable frame
- 2: chamber
- 3: plant pot
- 3a: upper edge of the plant pot
- 3b: tight sheath of the plant pot
- 3c: lower part of the plant pot
- 3d: bottom of the plant pot
- 3e: transmission unwoven fabric
- 3f: scoring unwoven fabric
- 3g: inflow opening
- 3h: overflow opening
- 3i: irrigating band
- 4: irrigating channel
- 5, 5a: overflow channel
- 5b: overflow reservoir
- 6: aerating channel
- 7: water reservoir
- 8: control panel
- 9: diode-based signaling device
- 10: switch
- 11: potentiometer
- 12: pump
- 13: power supply
- 14: cover

## Claims

1. A method for vertical cultivation of plants in plant pots according to claim 15 in a device according to claim 4 comprising irrigating, sprinkling, and illuminating cultivated plants and ensuring the ventilation of the root system, where the parameters of the irrigating, sprinkling, and illuminating are controlled, **characterized in that** the irrigation of the plants is performed gravitationally with the use of a belt of transmission made from water permeable, unwoven fabric, and comprises steps of delivering water to the highest level of the plants, such that the water freely enters a plant pot (3) via an irrigating channel (4), next, the water penetrates the plant pot, moistening also the unwoven fabric portion of the plant pot (3), the excess water flowing to an overflow channel (5, 5a) below the plant pot, making it possible for the water to enter the irrigating channel (4) of a lower level of the plants and to irrigate subsequent levels of the plants located below in a similar manner, and from the last, the lowest level of the plants water enters a reservoir (7), from which it is again pumped by a pump (12), after filtering, to the highest level of the plants, and also water from said reservoir (7) is delivered to sprinklers, wherein the water level in the reservoir (7) is controlled by means of a lower water level sensor and an upper water level sensor that signal, on a control panel (8), a deficiency or a surplus of water in the reservoir (7), correspondingly, and the ducts delivering water are flushed periodically in a closed cycle, and, moreover, the plants are illuminated periodically using a source of light of a spectrum fitted for the needs of the plants and their photosynthetic and energetic efficiency, with a possibility of setting the angle of incidence of the light rays onto the leaves of the cultivated plants.

2. The method according to claim 1, **characterized in that** water is delivered to the plant pot (3) from the bottom up, from an overflow reservoir (5b) by means of a water-absorbing band (3i) connected with the bottom (3d) of the plant pot (3), which soaks with water and moistens the unwoven-fabric band (3e) of transmission by means of capillary action, passing water from the bottom up and irrigating the root system of the plants from below.

3. The method according to claim 1, **characterized in that** the control of the angle of incidence of the light rays onto the plants is performed by moving a movable frame (1b), with a source of light located thereon, relative to a casing (1) with the plants.

4. A device for vertical cultivation of plants comprising pots according to claim 15, said device, comprising a casing with chambers and an irrigation system in a form of irrigating and overflow channels and aerating channels, in which the casing with the chambers is mounted to a vertical frame, wherein the chambers comprise at least one plant pot with a plant, the plant pot being equipped with an unwoven fabric container for the plant, which has a separate upper space and a lower space intended to accommodate a moisture keeping irrigating material that is air permeable, the device being equipped with an electronic circuit for controlling the irrigation systems, **characterized in that** the vertical casing (1) comprises at least one chamber (2) in which there is a plant pot (3) and at least one irrigating channel (4) and an overflow channel (5) that are arranged such that the irrigating channel (4) is located above the chamber (2) and the overflow channel (5) is located below the chamber (2), and the longitudinal axis of the plant pot (3) is inclined relative to the end face of the vertical casing (1) at an angle from 8° to 25°, preferably 13°, and after placing within the chamber (2), the bottom wall of the plant pot (3) is facing toward an aerating channel (6) located in the bottom of the chamber (2) and open to the outside, and in the device every plant pot (3) comprises a water permeable unwoven fabric (3e) that constitutes a band of transmission for water and/or has an additional unwoven fabric (3f) for storing water, and the casing (1) is mounted to a support structure in a form of a frame (1a) that on at least one of its sides has means for illuminating and means for extra sprinkling the plants, and to the lower side of the frame (1a) a container (7) is mounted comprising a water reservoir to which water flows down from overflow channels (5) and from which water is taken for irrigation and sprinkling, and a control panel (8) is located in an exposed place on the front side of the casing (1), comprising a signaling device (9) for signaling the water level in the reservoir (7) and a switch (10) for a circuit delivering water to the plants and means (11) for controlling the amount of water delivered to the cultivated plants.

5. The device according to claim 4, **characterised in that** the side of the frame (1a) has a movable portion in a form of at least one frame (1b) mounted rotatably relative to the axis of rotation that is parallel to the side of the frame (1a).

6. The device according to claim 4, **charactarized in that** the side of the frame (1a) is covered by a cover (14) that is mounted rotatably to said side of the frame (la), preferably the axis of rotation being parallel to the longitudinal axis of said side of the frame.

7. The device according to claim 4, **characterized in that** the irrigation system comprises a high-efficiency pump (12), at least one water filter, at least one water level sensor in the water reservoir (7), and at least one signaling device (9) providing information about the water level in the water reservoir, preferably in a form of a LED diode.

8. The device according to claim 4, **characterized in that** the irrigation means is at east one atomizer supplied with water from the irrigation system.

9. The device according to claim 4, **characterized in that** the illumination means are equipped with a source of light that is fitted in terms of its spectrum contents and photosynthetic and energetic efficiency to the needs of the cultivated plants,

10. The device according to claim 4, **characterized in that** the device comprises a power supply (13) for the irrigation, illumination, control, and signaling means, said power supply (13) being a DC power supply or an AC power supply.

11. The device according to claim 4, **characterized in that** the sprinkling means comprises a system for controlling the sprinkling jet and its range that is fitted to the growth of the plants.

12. The device according to claim 4, **characterized in that** one diode signaling device (9) is coupled with two water level sensors, the first water level sensor being located at the bottom of the water reservoir (7) and the second water level sensor being located at the upper edge of the water reservoir (7) .

13. The device according to claim 4, **characterized in that** the casing (1) is formed from one of: horizontal, shape-coupled modules, vertical modules that are shape-coupled or single plant pot modules that are shape-coupled.

14. The device according to claim 4, **characterized in that** the casing (1) is made from one of: ABS plastic, PCV by thermoforming or is made from EPP, EPS, XPS by injection moulding.

15. A special plant pot for vertical cultivation of plants comprising a unwoven fabric part and spaces facilitating air or water flow, **characterized in that** it is made from sealing rubber in the upper part, the rubber forming also the upper edge (3a), it is made from a tight sheath in the middle part (3b), and from water-permeable transmission unwoven fabric (3e) in the lower part (3c), the sealing rubber being arranged such that it terminates in the proximity of the upper edge (3a) of the plant pot whereas on the opposite side it covers the surface extending downwardly, preferably to one fourth of the height of the plant pot, and the band of the tight sheath extends yet further below, preferably the band being of a width of the half of the height of the plant pot, in the tight sheath of the plant pot there is an inflow opening (3g) for delivering water and an overflow opening (3h) for removing excess water from the plant pot, and the lower part (3c) and the bottom wall (3d) of the plant pot are made from water permeable transmission unwoven fabric (3e), and the inflow opening (3G) is located on the opposite side and above the overflow opening (3h), the tight sheath (3b) is lined with water permeable transmission unwoven fabric (3e) on the inside, extending from the upper edge of the tight sheath (3b) and terminating above the inflow opening (3g) and overflow opening (3h), and the storing unwoven fabric (3f) adhering to the transmission unwoven fabric (3e) from inside is arranged such that it starts at the half of the height of the water permeable transmission unwoven fabric (3e) and overlaps partially onto the inflow opening (3g) and the overflow opening (3h).

16. The special plant pot according to claim 15, **characterized in that** the bottom of the special plant pot has a band (3i) of water-permeable transmission unwoven fabric (3e) extending downwardly, for drawing the moisture from below.

17. The special plant pot according to anyone of claim 15 or 16 **characterized in that** it is built from 30% to 85% of unwoven fabric, preferably 45%, the transmission unwoven fabric (3e) filling the internal tight sheath (3b) being a mix of cut polypropylene and polyester fibers, whereas the unwoven fabric filling the lower part (3c), the bottom (3d), and the band (3i) is made from polypropylene fibers.

## Patentansprüche

1. Verfahren zur vertikalen Kultivierung von Pflanzen in Pflanzentöpfen nach Anspruch 15 in einer Vorrichtung nach Anspruch 4, umfassend Bewässern, Beregnen und Beleuchten von kultivierten Pflanzen und Gewährleisten der Belüftung des Wurzelsystems, wobei die Parameter des Bewässerns, Beregnens und Beleuchtens gesteuert werden, **dadurch gekennzeichnet, dass** die Bewässerung der Pflanzen durch Schwerkraft unter Benutzung eines Übertragungsbands, der aus wasserdurchlässigem ungewobenem Stoff hergestellt ist, ausgeführt wird und Schritte des Zuführens von Wasser zur höchsten Ebene der Pflanzen umfasst, sodass das Wasser über einen Bewässerungskanal (4) frei in einen Pflanzentopf (3) eintritt, das Wasser als Nächstes den Pflanzentopf durchdringt und außerdem den ungewobenen Stoffabschnitt des Pflanzentopfs (3) befeuchtet, das überschüssige Wasser zu einem Überlaufkanal (5, 5a) unterhalb des Pflanzentopfs fließt, wodurch es möglich ist, dass das Wasser in den Bewässerungskanal (4) einer unteren Ebene der Pflanzen eintritt und nachfolgende Ebenen der Pflanzen, die sich darunter befinden, auf ähnliche Art und Weise zu bewässern, und Wasser von der letzten, der niedrigsten Ebene der Pflanzen, in einen Sammelbehälter (7) eintritt, von wo es, nach Filtrieren, durch eine Pumpe (12) wieder zur höchsten Ebene der Pflanzen gepumpt wird und außerdem Wasser vom Sammelbehälter (7) zu Wassersprengern zugeführt wird, wobei der Wasserpegel im Sammelbehälter (7) mithilfe eines unteren Wasserpegelsensors und eines oberen Wasserpegelsensors gesteuert wird, die, auf einem Bedienungspult (8), einen Mangel oder einen Überschuss von Wasser im Sammelbehälter (7) entsprechend signalisieren, und wobei die Leitungen, die Wasser zuführen, periodisch in einem geschlossenen Kreislauf gespült werden und die Pflanzen zudem periodisch unter Benutzung einer Lichtquelle eines Spektrums, das für die Bedürfnisse der Pflanzen und ihre photosynthetische und energetische Effizienz geeignet ist, beleuchtet werden, mit einer Möglichkeit des Einstellens des Einfallswinkels der Lichtstrahlen auf die Blätter der kultivierten Pflanzen.

2. Verfahren nach Anspruch 1, **dadurch gekennzeichnet, dass** dem Pflanzentopf (3) Wasser vom Boden nach oben zugeführt wird, von einem Überlaufbehälter (5b) mithilfe eines wasserabsorbierenden Bands (3i), das mit dem Boden (3d) des Pflanzentopfs (3) verbunden ist und sich mit Wasser vollsaugt und das ungewobene Übertragungsstoffband (3e) mittels Kapillarwirkung befeuchtet und Wasser vom Boden nach oben durchführt und das Wurzelsystem der Pflanzen von unten bewässert.

3. Verfahren nach Anspruch 1, **dadurch gekennzeichnet, dass** die Steuerung des Einfallswinkels der Lichtstrahlen auf die Pflanzen durch Bewegen eines beweglichen Rahmens (1b), mit einer daran befindlichen Lichtquelle, bezüglich eines Gehäuses (1) mit den Pflanzen ausgeführt wird.

4. Vorrichtung zur vertikalen Kultivierung von Pflanzen, umfassend Töpfe nach Anspruch 15, wobei die Vorrichtung ein Gehäuse mit Kammern und ein Bewässerungssystem in einer Form von Bewässerungs- und Überlaufkanälen und Belüftungskanälen umfasst, wobei das Gehäuse mit den Kammern an einem vertikalen Rahmen angebracht ist, wobei die Kammern zumindest einen Pflanzentopf mit einer Pflanze umfassen, wobei der Pflanzentopf mit einem ungewobenem Stoffbehälter für die Pflanze ausgestattet ist, der einen separaten oberen Raum und einen unteren Raum aufweist, der zum Aufnehmen eines feuchtigkeitsbewahrenden Bewässerungsmaterials, welches luftdurchlässig ist, beabsichtigt ist, wobei die Vorrichtung mit einem elektronischen Schaltkreis zum Steuern der Bewässerungssysteme ausgestattet ist, **dadurch gekennzeichnet, dass** das vertikale Gehäuse (1) zumindest eine Kammer (2), in der sich ein Pflanzentopf (3) und zumindest ein Bewässerungskanal (4) und ein Überlaufkanal (5) befindet, umfasst, die derart angeordnet sind, dass sich der Bewässerungskanal (4) über der Kammer (2) befindet und sich der Überlaufkanal (5) unter der Kammer (2) befindet, und die Längsachse des Pflanzentopfs (3) bezüglich der Endseitenfläche des vertikalen Gehäuses (1) in einem Winkel von 8° bis 25°, vorzugsweise 13°, geneigt ist, und, nach dem Anordnen innerhalb der Kammer (2), die Bodenwand des Pflanzentopfs (3) einem Belüftungskanal (6) zugekehrt ist, der sich im Boden der Kammer (2) befindet und zur Außenseite offen ist, und in der Vorrichtung jeder Pflanzentopf (3) einen wasserdurchlässigen ungewobenen Stoff (3e) umfasst, der ein Übertragungsband für Wasser bildet, und/oder einen zusätzlichen ungewobenen Stoff (3f) zum Speichern von Wasser aufweist, und das Gehäuse (1) an einer Stützstruktur in einer Form eines Rahmens (1a) angebracht ist, der an zumindest einer seiner Seiten Mittel zum Beleuchten und Mittel zum zusätzlichen Beregnen der Pflanzen aufweist, und an der unteren Seite des Rahmens (1a) ein Behälter (7) angebracht ist, der einen Wassersammelbehälter umfasst, zu dem Wasser von Überlaufkanälen (5) hinunter fließt und von dem Wasser zur Bewässerung und Beregnung entnommen wird, und sich ein Bedienungspult (8) an einem freiliegenden Platz auf der Vorderseite des Gehäuses (1) befindet, das eine Signalisierungsvorrichtung (9) zum Signalisieren des Wasserpegels im Sammelbehälter (7) und einen Schalter (10) für einen Kreis, der den Pflanzen Wasser zuführt, und Mittel (11) zum Steuern der Menge von Wasser, die den kultivierten Pflanzen zugeführt wird, umfasst.

5. Vorrichtung nach Anspruch 4, **dadurch gekennzeichnet, dass** die Seite des Rahmens (1a) einen beweglichen Abschnitt in einer Form von zumindest einem Rahmen (1b) aufweist, der drehbar bezüglich der Drehachse angebracht ist, die parallel zur Seite des Rahmens (1a) ist.

6. Vorrichtung nach Anspruch 4, **dadurch gekennzeichnet, dass** die Seite des Rahmens (1a) durch eine Abdeckung (14) abgedeckt ist, die drehbar an der Seite des Rahmens (1a) angebracht ist, wobei die Drehachse vorzugsweise parallel zur Längsachse der Seite des Rahmens ist.

7. Vorrichtung nach Anspruch 4, **dadurch gekennzeichnet, dass** das Bewässerungssystem eine Hocheffizienzpumpe (12), zumindest einen Wasserfilter, zumindest einen Wasserpegelsensor im Wassersammelbehälter (7) und zumindest eine Signalisierungsvorrichtung (9), die Information über den Wasserpegel im Wassersammelbehälter liefert, vorzugsweise in einer Form einer LED-Diode, umfasst.

8. Vorrichtung nach Anspruch 4, **dadurch gekennzeichnet, dass** das Bewässerungsmittel zumindest ein Zerstäuber ist, der mit Wasser vom Bewässerungssystem versorgt wird.

9. Vorrichtung nach Anspruch 4, **dadurch gekennzeichnet, dass** die Beleuchtungsmittel mit einer Lichtquelle ausgestattet sind, die hinsichtlich ihrer Spektruminhalte und photosynthetischen und energetischen Effizienz für die Bedürfnisse der kultivierten Pflanzen geeignet ist.

10. Vorrichtung nach Anspruch 4, **dadurch gekennzeichnet, dass** die Vorrichtung eine Stromversorgung (13) für die Bewässerung, Beleuchtung, Steuerung und Signalisierungsmittel umfasst, wobei die Stromversorgung eine DC-Stromversorgung oder eine AC-Stromversorgung ist.

11. Vorrichtung nach Anspruch 4, **dadurch gekennzeichnet, dass** das Beregnungsmittel ein System zum Steuern des Beregnunsstrahls und seiner Reichweite umfasst, das für das Wachstum der Pflanzen geeignet ist.

12. Vorrichtung nach Anspruch 4, **dadurch gekennzeichnet, dass** eine Diodensignalisierungsvorrichtung (9) mit zwei Wasserpegelsensoren verkoppelt ist, wobei sich der erste Wasserpegelsensor am Boden des Wassersammelbehälters (7) befindet und sich der zweite Wasserpegelsensor an der Oberkante des Wassersammelbehälters (7) befindet.

13. Vorrichtung nach Anspruch 4, **dadurch gekennzeichnet, dass** das Gehäuse (1) aus einem von Folgendem ausgebildet ist: horizontalen formgekuppelten Modulen, vertikalen Modulen, die formgekuppelt sind, oder einzelnen Pflanzentopfmodulen, die formgekuppelt sind.

14. Vorrichtung nach Anspruch 4, **dadurch gekennzeichnet, dass** das Gehäuse (1) aus einem von Folgendem hergestellt ist: ABS-Kunststoff, PCV durch Warmformen, oder aus EPP, EPS, XPS durch Spritzgießen hergestellt ist.

15. Besonderer Pflanzentopf zur vertikalen Kultivierung von Pflanzen, umfassend ein ungewebtes Stoffteil und Räume, die Luft- oder Wasserstrom ermöglichen, **dadurch gekennzeichnet, dass** er aus Dichtungsgummi im oberen Teil hergestellt ist, wobei der Gummi außerdem die Oberkante (3a) ausbildet, er aus einer engen Hülle im Mittelteil (3b) hergestellt ist und aus wasserdurchlässigem ungewebtem Übertragungsstoff (3e) im unteren Teil (3c), wobei der Dichtungsgummi derart angeordnet ist, dass er in der unmittelbaren Nähe der Oberkante (3a) des Pflanzentopfs endet, während er auf der gegenüberliegenden Seite die nach unten verlaufende Oberfläche abdeckt, vorzugsweise zu einem Viertel der Höhe des Pflanzentopfs, und das Band der engen Hülle noch weiter nach unten verläuft, wobei das Band vorzugsweise eine Breite von der Hälfte der Höhe des Pflanzentopfs aufweist, wobei in der engen Hülle des Pflanzentopfs eine Zuflussöffnung (3g) zum Zuführen von Wasser und eine Überlauföffnung (3h) zum Beseitigen von überschüssigem Wasser aus dem Pflanzentopf vorliegt, und das untere Teil (3c) und die Bodenwand (3d) des Pflanzentopfs aus wasserdurchlässigem ungewebtem Übertragungsstoff (3e) hergestellt sind, und sich die Zuflussöffnung (3g) auf der gegenüberliegenden Seite und über der Überlauföffnung (3h) befindet, die enge Hülle (3b) auf der Innenseite mit wasserdurchlässigem ungewebtem Übertragungsstoff (3e) ausgekleidet ist, von der Oberkante der engen Hülle (3b) aus verlaufend und über der Zuflussöffnung (3g) und Überlauföffnung (3h) endend, und der ungewebte Speicherstoff (3f), der am ungewebten Übertragungsstoff von innen anhaftet, derart angeordnet ist, dass er auf der Hälfte der Höhe des wasserdurchlässigen ungewebten Übertragungsstoffs (3e) beginnt und die Zuflussöffnung (3g) und die Überlauföffnung (3h) teilweise überdeckt.

16. Besonderer Pflanzentopf nach Anspruch 15, **dadurch gekennzeichnet, dass** der Boden des besonderen Pflanzentopfs ein Band (3i) aus wasserdurchlässigem ungewobenen Übertragungsstoff (3e), das nach unten verläuft, zum Anziehen der Feuchtigkeit von unterhalb aufweist.

17. Besonderer Pflanzentopf nach einem der Ansprüche 15 oder 16, **dadurch gekennzeichnet, dass** er aus 30 % bis 85 % ungewebtem Stoff gebaut ist, vorzugsweise 45 %, wobei der ungewebte Übertragungsstoff (3e), der die innere enge Hülle (3b) füllt, eine Mischung aus geschnittenen Polypropylen- und Polyesterfasern ist, während der ungewebte Stoff, der das untere Teil (3c), den Boden (3d) und das Band (3i) füllt, aus Polypropylenfasern hergestellt ist.

## Revendications

1. Procédé de culture verticale de plantes dans des pots de plantes selon la revendication 15 dans un dispositif selon la revendication 4, comprenant l'irrigation, l'aspersion et l'éclairage de plantes cultivées et l'assurance de la ventilation du système racinaire, dans lequel les paramètres de l'irrigation, l'aspersion et l'éclairage sont contrôlés, **caractérisé en ce que** 1' irrigation des plantes est réalisée par la gravitation en utilisant une courroie de transmission composée d'un textile non tissé perméable à l'eau, et comprend les étapes de délivrance d'eau au plus haut niveau des plantes de manière à ce que l'eau entre librement dans un pot de plante (3) via un canal d'irrigation (4), qu'ensuite l'eau pénètre dans le pot de plante, en humidifiant également la section de textile non tissé du pot de plante (3), l'eau excédentaire s'écoulant vers un canal de débordement (5, 5a) en-dessous du pot de plante, en permettant à l'eau d'entrer dans le canal d'irrigation (4) d'un niveau inférieur des plantes et d'irriguer les niveaux suivants des plantes situés en dessous de manière similaire, et que, depuis le dernier niveau le plus bas des plantes, de l'eau entre dans un réservoir (7) depuis lequel elle est à nouveau pompée par une pompe (12), après filtration, vers le niveau le plus haut des plantes, et que l'eau provenant dudit réservoir (7) soient aussi délivrée par des gicleurs, le niveau d'eau dans le réservoir (7) étant contrôlé au moyen d'un détecteur de niveau bas et d'un détecteur de niveau haut qui signale, sur un panneau de commande (8), une déficience ou un surplus d'eau dans le réservoir (7) de manière correspondante, et que les conduites de délivrance de l'eau sont rincées périodiquement dans un cycle fermé et que, de plus, les plantes sont éclairées périodiquement en utilisant une source de lumière d'un spectre ajusté aux besoins des plantes et à leur efficience photosynthétique et énergétique, avec une possibilité de réglage de l'angle d'incidence des rayons lumineux sur les feuilles des plantes cultivées.

2. Procédé selon la revendication 1, **caractérisé en ce que** de l'eau est délivrée au pot de plante (3) du fond vers le haut depuis un réservoir de débordement (5b) au moyen d'une bande absorbante d'eau (3i) connectée au fond (3d) du pot de plante (3) et qui s'imprègne d'eau et humidifie la bande en textile non tissé (3e) de transmission au moyen d'une action capillaire, en faisant passer de l'eau depuis le fond vers le haut et en irriguant le système racinaire des plantes depuis le bas.

3. Procédé selon la revendication 1, **caractérisé en ce que** le contrôle de l'angle d'incidence des rayons lumineux sur les plantes est réalisé en déplaçant un cadre mobile (1b), avec une source de lumière située dessus, par rapport à un compartiment (1) contenant les plantes.

4. Dispositif de culture verticale de plantes, comprenant des pots selon la revendication 15, ledit dispositif comprenant un compartiment doté de chambres et un système d'irrigation sous forme de canaux d'irrigation et de débordement et de canaux d'aération, dans lequel le compartiment comportant les champs est monté sur un cadre vertical, les chambres comprenant au moins un pot de plante contenant une plante, le pot de plante étant équipé d'un contenant en textile non tissé pour la plante, lequel contenant a un espace supérieur séparé et un espace inférieur destiné à loger un matériau d'irrigation conservant l'humidité qui est perméable à l'air, le dispositif étant équipé d'un circuit électronique pour commander le système d'irrigation, **caractérisé en ce que** le compartiment vertical (1) comprend au moins une chambre (2) dans laquelle il y a un pot de plante (3) et au moins un canal d'irrigation (4) et un canal de débordement (5) qui sont disposés de manière à ce que le canal d'irrigation (4) soit situé au-dessus de la chambre (2) et que le canal de débordement (5) soit situé en dessous de la chambre (2), et que l'axe longitudinal du pot de plantes (3) est incliné par rapport à la face terminale du compartiment vertical (1) suivant un angle de 8° à 25°, de préférence de 13°, et que, après placement dans la chambre (2), la paroi de fond du pot de plante (3) soit tournée vers un canal d'aération (6) situé au fond de la chambre (2) et ouvert sur l'extérieur, et que, dans le dispositif, chaque pot de plante (3) comprend un textile non tissé perméable à l'eau (3e) qui constitue une bande de transmission pour de l'eau et/ou comporte un textile non tissé supplémentaire (3f) pour stocker de l'eau, et que le compartiment (1) est monté sur une structure support sous la forme d'un cadre (1a) qui, au moins sur une de ses faces, comporte un moyen d'éclairage et un moyen d'aspersion supplémentaire des plantes, et que, sur la face inférieure du cadre (la), est monté un contenant (7) comprenant un réservoir à eau dans lequel de l'eau descend en s'écoulant depuis des canaux de débordement (5) et dans lequel de l'eau est prise pour l'irrigation et l'aspersion, et qu'un panneau de commande (8) se situe dans un endroit exposé sur la face avant du compartiment (1), ce panneau de commande comprenant un dispositif de signalisation (9) pour signaler le niveau d'eau dans le réservoir (7) et un interrupteur (10) pour un circuit délivrant de l'eau aux plantes et un moyen (11) pour contrôler la quantité d'eau délivrée aux plantes cultivées.

5. Dispositif selon la revendication 4, **caractérisé en ce que** le côté du cadre (1a) a une section mobile sous forme d'au moins un cadre (1b) monté de manière à pouvoir tourner par rapport à l'axe de rotation qui est parallèle au côté du cadre (1a).

6. Dispositif selon la revendication 4, **caractérisé en ce que** le côté du cadre (1a) est couvert d'un recouvrement (14) qui est monté de manière à pouvoir tourner sur ledit côté du cadre (la), l'axe de rotation étant de préférence parallèle à l'axe longitudinal dudit côté du cadre.

7. Dispositif selon la revendication 4, **caractérisé en ce que** le système d'irrigation comprend une pompe à haute efficacité (12), au moins un filtre à eau, au moins un détecteur de niveau d'eau dans le réservoir à eau (7), et au moins un dispositif de signalisation (9) donnant des informations sur le niveau d'eau dans le réservoir à eau, de préférence sous la forme d'une diode LED.

8. Dispositif selon la revendication 4, **caractérisé en ce que** le moyen d'irrigation est au moins un atomiseur alimenté en eau depuis le système d'irrigation.

9. Dispositif selon la revendication 4, **caractérisé en ce que** le moyen d'éclairage est équipé d'une source de lumière qui est adaptée en termes de son contenu spectral et de son efficience photosynthétique et énergétique aux besoins des plantes cultivées.

10. Dispositif selon la revendication 4, **caractérisé en ce que** le dispositif comprend une alimentation électrique (13) pour l'irrigation, l'éclairage, la commande et les moyens de signalisation, ladite alimentation électrique (13) étant une alimentation électrique DC ou une alimentation électrique AC.

11. Dispositif selon la revendication 4, **caractérisé en ce que** le moyen d'arrosage comprend un système de commande du jet d'aspersion et de sa plage qui est adapté à la croissance des plantes.

12. Dispositif selon la revendication 4, **caractérisé en ce qu'**un dispositif de signalement à diodes (9) est couplé à deux détecteurs de niveau d'eau, le premier détecteur de niveau d'eau étant situé au fond du réservoir à eau (7), et le second détecteur de niveau d'eau étant situé au niveau du bord supérieur du réservoir à eau (7).

13. Dispositif selon la revendication 4, **caractérisé en ce que** le compartiment (1) est formé d'un module parmi : des modules horizontaux, des modules à formes couplées, des modules verticaux qui sont des modules de pots de plantes à formes couplées ou simples dont les formes sont couplées.

14. Dispositif selon la revendication 4, **caractérisé en ce que** le compartiment (1) est composé d'un matériau parmi : le plastique ABS, le PVC par thermoformage ou est composé d'EPP, EPS, XPS par moulage par injection.

15. Pot de plantes spécial pour la culture verticale de plantes, comprenant une pièce en textile non tissé et des espaces facilitant l'écoulement d'air ou d'eau, **caractérisé en ce qu'**il est composé de caoutchouc d'étanchéité dans la partie supérieure, le caoutchouc formant également le bord supérieur (3a), qu'il est composé d'une gaine étroite dans la partie médiane (3b), et d'un textile non tissé de transmission perméable à l'eau (3e) dans la partie inférieure (3c), le caoutchouc d'étanchéité étant disposé de manière à ce qu'il se termine à proximité du bord supérieur (3a) du pot de plante, tandis que, sur la face opposée, il couvre la surface étendant vers le bas, de préférence jusqu'à un quart de la hauteur du pot de plante, et que la bande de la gaine étroite s'étend toutefois plus vers le bas, la bande étant de préférence d'une largeur représentant la moitié de la hauteur du pot de plante, que, dans la gaine étroite du pot de plante, il y a un orifice d'afflux (3g) pour délivrer de l'eau et un orifice de débordement (3h) pour éliminer l'eau excédentaire du pot de plante, et que la partie inférieure (3c) et la paroi de fond (3d) du pot de plante sont composées de textile non tissé de transmission perméable à l'eau (3e), et que l'orifice d'afflux (3g) se situe sur la face opposée et au-dessus de l'orifice de débordement (3h), que la gaine étroite (3b) est doublée d'un textile non tissé de transmission perméable à l'eau (3e) sur l'intérieur, lequel textile non tissé s'étend depuis le bord supérieur de la gaine étroite (3b) et se termine au-dessus de l'orifice d'afflux (3g) et de l'orifice de débordement (3h), et que le textile non tissé de stockage (3f) adhérant au textile non tissé de transmission (3e) depuis l'intérieur est disposé de manière à ce qu'il commence à la moitié de la hauteur du textile non tissé de transmission perméable à l'eau (3e) et chevauche partiellement l'orifice d'afflux (3g) et l'orifice de débordement (3h) .

16. Pot de plante spécial selon la revendication 15, **caractérisé en ce que** le fond du pot de plante spécial comporte une bande (3i) de textile non tissé de transmission perméable à l'eau (3e) s'étendant vers le bas pour extraire l'humidité depuis le bas.

17. Pot de plante spécial selon l'une quelconque des revendications 15 ou 16, **caractérisé en ce qu'**il est composé de 30 % à 85 % de textile non tissé, de préférence 45 %, le textile non tissé de transmission (3e) remplissant la gaine étroite interne (3b) étant un mélange de fibres de polypropylène et de polyester coupées, tandis que le textile non tissé remplissant la partie inférieure (3c), le fond (3d), et la bande (3i) est composé de fibres de polypropylène.
